# EUROPEAN PATENT APPLICATION

(11) **EP 4 729 366 A1**
(43) Date of publication of application: **22.04.2026**
(21) Application number: 23946535.4
(22) Date of filing: 29.12.2023
(51) Int. Cl.: B60R 16/02, H01M 10/44

(54) **BATTERY, BATTERY SYSTEM AND ELECTRICAL DEVICE**

(30) Priority: 26.07.2023 CN 202321988215 U
(71) Applicant: Contemporary Amperex Technology Co., Limited, Ningde, Fujian 352100 (CN)
(72) Inventor: XIE, Shengxing, Ningde, Fujian 352100 (CN); LIU, Ruobing, Ningde, Fujian 352100 (CN); TONG, Huaqiao, Ningde, Fujian 352100 (CN)
(74) Representative: Kraus & Lederer PartGmbB
(86) International application number: PCT/CN2023/143415
(87) International publication number: WO 2025/020460

(57) **Abstract**

This application provides a battery, a battery system, and an electric apparatus. The battery includes: a battery module connected to a first power supply bus; a first housing, where the battery module is disposed within the first housing, the first housing includes a first wall portion, the first wall portion is provided with a first connecting member configured to be connected to a load, and an output terminal of the first power supply bus is connected to the first connecting member; and a first switch member, disposed at the output terminal of the first power supply bus and configured to control connection and disconnection of an electrical path between the first power supply bus and the first connecting member. In this way, at least high-voltage risks posed by the battery to the outside can be reduced, and the safety of the battery can be enhanced.

## Description

This application claims priority to Chinese Patent Application No. 202321988215X, filed on July 26, 2023, entitled "BATTERY, BATTERY SYSTEM, AND ELECTRIC APPARATUS", which is incorporated herein by reference in its entirety.

### TECHNICAL FIELD

This application relates to the field of battery technology, and in particular, to a battery, a battery system, and an electric apparatus.

### BACKGROUND

With the development of battery technology, batteries are applied in an increasing number of fields and are gradually replacing traditional fossil energy sources in the fields such as automotive power. A battery can store chemical energy and controllably convert the chemical energy into electrical energy. In rechargeable batteries, after discharge, the active material can be reactivated through charging for continued use.

Since the voltage of battery systems, which are key components of electric apparatuses such as electric vehicles, ranges from tens of volts to hundreds of volts, there are high-voltage safety risks during use, maintenance, or production processes. In related technologies, a fuse is added inside a battery housing to reduce high-voltage safety risks, but this method only provides fuse protection in cases of external short circuits or electric shocks, and the battery still poses persistent high-voltage safety risks to the outside.

### SUMMARY

In view of the above problems, this application provides a battery, a battery system, and an electric apparatus to at least reduce high-voltage risks posed by the battery to the outside and enhance the safety of the battery.

According to a first aspect, this application provides a battery including: a battery module connected to a first power supply bus; a first housing, where the battery module is disposed within the first housing, the first housing includes a first wall portion, the first wall portion is provided with a first connecting member configured to be connected to a load, and an output terminal of the first power supply bus is connected to the first connecting member; and a first switch member, disposed at the output terminal of the first power supply bus and configured to control connection and disconnection of an electrical path between the first power supply bus and the first connecting member. In this way, the first connecting member connected to a load is disposed on the first housing of the battery, so that the first connecting member enables electrical transmission between the battery module within the first housing of the battery and the load; and the first switch member is disposed at the output terminal of the first power supply bus of the battery module, and the first switch member controls the connection and disconnection of the electrical path between the first power supply bus and the first connecting member. Since the first power supply bus is connected to the load through the first connecting member, the first switch member can control the connection and disconnection of the electrical path between the first power supply bus of the battery module and the load, thereby allowing the battery module to be electrically disconnected from the load through the first switch member, enabling connection and disconnection of the electrical path between the battery module and the load, at least reducing high-voltage risks posed by the battery to the outside, and enhancing the safety of the battery. Furthermore, since the first switch member is disposed at the output terminal of the first power supply bus, there is no need to modify the structure of the existing internal components such as the battery module of the battery and connection structures between the components, resulting in a simple process and low cost.

In some embodiments, the first wall portion is provided with a first through hole, the first connecting member is mounted on a side of the first wall portion facing away from the battery module, and a portion of the first switch member or a portion of the output terminal of the first power supply bus is disposed within the first through hole and connected to the first connecting member. Mounting the first connecting member on the side of the first wall portion facing away from the battery module, that is, an outer side of the first housing, can reduce interference of the first connecting member to the battery module; and using the first through hole in the first wall portion to route a connection terminal of the first switch member or the output terminal of the first power supply bus can simplify the structure and process.

In some embodiments, the first switch member is disposed on a side of the first wall portion close to the battery module, a portion of the first switch member is disposed within the first through hole, and the first switch member is connected to the output terminal of the first power supply bus and the first connecting member, respectively. Disposing the first switch member on the side of the first wall portion of the first housing close to the battery module, that is, an inner side of the first housing, allows the first housing to protect the first switch member and reduce erroneous operations to the first switch member; and a connection terminal of the first switch member extends through the first through hole to the outer side of the first housing so as to be connected to the first connecting member, such that the first switch member is disposed between the output terminal of the first power supply bus and the first connecting member, thereby enabling the first switch member to control the connection and disconnection of the electrical path between the first power supply bus and the first connecting member.

In some embodiments, the first switch member is disposed on the side of the first wall portion facing away from the battery module, a portion of the first switch member is disposed within the first through hole, and the first switch member is connected to the output terminal of the first power supply bus and the first connecting member, respectively. Disposing the first switch member on the side of the first wall portion of the first housing facing away from the battery module, that is, the outer side of the first housing, can enhance the convenience of operating the first switch member, and there is no need to operate the first housing or its internal components when the first switch member needs to be operated; and a connection terminal of the first switch member extends through the first through hole to the outer side of the first housing so as to be connected to the first connecting member, such that the first switch member is disposed between the output terminal of the first power supply bus and the first connecting member, thereby enabling the first switch member to control the connection and disconnection of the electrical path between the first power supply bus and the first connecting member.

In some embodiments, the first switch member is disposed on the side of the first wall portion close to the battery module, the first switch member is connected in series with the output terminal of the first power supply bus, and a portion of the output terminal of the first power supply bus is disposed within the first through hole and connected to the first connecting member. Disposing the first switch member on the side of the first wall portion of the first housing close to the battery module, that is, the inner side of the first housing, allows the first housing to protect the first switch member and reduce erroneous operations to the first switch member; and the first switch member is connected in series with the output terminal of the first power supply bus and connected to the first connecting member through the output terminal of the first power supply bus, enabling the first switch member to control the connection and disconnection of the electrical path between the first power supply bus and the first connecting member.

In some embodiments, the battery further includes: a connection socket mounted at the first through hole, where the first switch member is plugged into the connection socket. Using the connection socket to connect the first switch member to the first wall portion can enhance the convenience of mounting and dismounting the first switch member.

In some embodiments, the first connecting member is fixed to the connection socket, which can enhance the convenience of mounting and dismounting the first connecting member.

In some embodiments, an extension direction of the first connecting member is perpendicular to an axial direction of the first through hole. The axial direction of the first through hole is consistent with a thickness direction of the first wall portion, and arranging the extension direction of the first connecting member perpendicular to the thickness direction of the first wall portion allows the first connecting member to extend along the surface of the first wall portion, enabling the first wall portion to serve as a supporting protective surface to reduce the risk of damage to the first connecting member, and enabling the first connecting member to share extension space with the first wall portion, thereby reducing the volume of the battery.

In some embodiments, the first wall portion includes a panel, and the first connecting member is disposed on the panel. Disposing the first connecting member on the panel of the first housing facilitates the connection between the first power supply bus of the battery module and the first connecting member, can shorten the electrical path therebetween, and facilitates the connection of the first connecting member and the load, reducing interference to the first connecting member.

In some embodiments, the battery further includes: a panel disposed on a side of the first wall portion facing away from the battery module, where the first connecting member is disposed on the panel. Disposing the first connecting member on the panel independent of the first housing can enhance the overall reliability of the first housing, and connecting the first connecting member to the first housing through the panel allows for maintenance of the first connecting member without disassembling the first housing, thereby enhancing the convenience of maintaining the first connecting member.

In some embodiments, the first power supply bus includes a high-voltage bus, and the first connecting member includes a high-voltage connector. The high-voltage connector connected to a load is disposed on the first housing, the first switch member is disposed at an output terminal of the high-voltage bus, and an electrical path between the high-voltage bus and the high-voltage connector is controlled through the first switch member, reducing high-voltage safety risks posed by the battery to the outside.

In some embodiments, the high-voltage bus includes a high-voltage positive bus, and the high-voltage connector includes a high-voltage positive output port. The first switch member is disposed at an output terminal of the high-voltage positive bus and an electrical path between the high-voltage positive bus and the high-voltage positive output port is controlled through the first switch member, reducing high-voltage safety risks posed by the battery to the outside. In addition, the electrical path to the load is disconnected from the output terminal of the high-voltage positive bus of the battery, that is, a total high-voltage positive output terminal of the battery, improving the real-time performance of power disconnection control, thereby further enhancing the safety of the battery.

In some embodiments, the first switch member includes: a relay. The relay is used to implement the function of the first switch member. Since the relay has the advantages such as high sensitivity, low control power, good electromagnetic compatibility, long lifespan, and high reliability, the safety of the battery can be further enhanced.

In some embodiments, the first switch member includes: a manual maintenance switch with an internal relay disposed therein. The manual maintenance switch with an internal relay is used to implement the function of the first switch member, which not only can replace a manual maintenance switch on a traditional battery pack for disconnecting an electrical path between positive and negative electrodes of a battery cell, but also enable an electrical circuit between the battery and a load, thereby at least improving high-voltage risks to the outside.

In some embodiments, the battery further includes: a battery management unit connected to the first switch member, where the first switch member obtains a first control signal from the battery management unit and controls, based on the first control signal, the connection and disconnection of the electrical path between the first power supply bus and the first connecting member. The first switch member is electrically connected to the battery management unit, enabling the battery management unit to control, based on parameters of the battery module and the like, the first switch member to operate, to improve automated monitoring of the battery module and the like and automated control of the first switch member and the like, thereby improving control accuracy and real-time performance, and enhancing the safety of the battery.

According to a second aspect, this application provides a battery system. The battery system includes: a battery connected to a second power supply bus; a second housing, where the battery is disposed within the second housing, the second housing includes a second wall portion, the second wall portion is provided with a second connecting member configured to be connected to a load, and an output terminal of the second power supply bus is connected to the second connecting member; and a second switch member disposed at the output terminal of the second power supply bus and configured to control connection and disconnection of an electrical path between the second power supply bus and the second connecting member. In this way, the second connecting member connected to the load is disposed on the second housing of the battery system to enable electrical transmission between the battery within the second housing and the load through the second connecting member; the second switch member is disposed at the output terminal of the second power supply bus of the battery system; and the second switch member controls the connection and disconnection of the electrical path between the second power supply bus and the second connecting member. Since the second power supply bus is connected to the load through the second connecting member, the second switch member can control the connection and disconnection of the electrical path between the second power supply bus of the battery and the load, thereby allowing the battery to be electrically disconnected from the load through the second switch member, enabling connection and disconnection of the electrical path between the battery and the load, at least reducing high-voltage risks posed by the battery to the outside, and enhancing the safety of the battery. Furthermore, since the second switch member is disposed at the output terminal of the second power supply bus, there is no need to modify the structure of the existing internal components of the battery system such as the battery and connection structures between the components, resulting in a simple process and low cost.

In some embodiments, the second wall portion is provided with a second through hole, the second connecting member is mounted on a side of the second wall portion facing away from the battery, and a portion of the second switch member or a portion of the output terminal of the second power supply bus is disposed within the second through hole and connected to the second connecting member. Mounting the second connecting member on the side of the second wall portion facing away from the battery, that is, an outer side of the second housing, can reduce interference of the second connecting member to the battery; and using the second through hole in the second wall portion to route a connection terminal of the second switch member or the output terminal of the second power supply bus can simplify the structure and process.

In some embodiments, the second switch member is disposed on a side of the second wall portion close to the battery, a portion of the second switch member is disposed within the second through hole, and the second switch member is connected to the output terminal of the second power supply bus and the second connecting member, respectively. Disposing the second switch member on the side of the second wall portion of the second housing close to the battery, that is, an inner side of the second housing, allows the second housing to protect the second switch member and reduce erroneous operations to the second switch member; and a connection terminal of the second switch member extends through the second through hole to the outer side of the second housing so as to be connected to the second connecting member, such that the second switch member is disposed between the output terminal of the second power supply bus and the second connecting member, thereby enabling the second switch member to control the connection and disconnection of the electrical path between the second power supply bus and the second connecting member.

In some embodiments, the second switch member is disposed on a side of the second wall portion facing away from the battery module, a portion of the second switch member is disposed within the second through hole, and the second switch member is connected to the output terminal of the second power supply bus and the second connecting member, respectively. Disposing the second switch member on the side of the second wall portion of the second housing facing away from the battery, that is, the outer side of the second housing, can enhance the convenience of operating the second switch member, and there is no need to operate the second housing or its internal components when the second switch member needs to be operated; and a connection terminal of the second switch member extends through the second through hole to the outer side of the second housing so as to be connected to the second connecting member, such that the second switch member is disposed between the output terminal of the second power supply bus and the second connecting member, thereby enabling the second switch member to control the connection and disconnection of the electrical path between the second power supply bus and the second connecting member.

In some embodiments, the second switch member is disposed on a side of the wall portion close to the battery, the second switch member is connected in series with the output terminal of the second power supply bus, and a portion of the output terminal of the second power supply bus is disposed within the second through hole and connected to the second connecting member. Disposing the second switch member on the side of the second wall portion of the second housing close to the battery, that is, the inner side of the second housing, allows the second housing to protect the second switch member and reduce erroneous operations to the second switch member; and the second switch member is connected in series with the output terminal of the second power supply bus and connected to the second connecting member through the output terminal of the second power supply bus, enabling the second switch member to control the connection and disconnection of the electrical path between the second power supply bus and the second connecting member.

According to a third aspect, this application provides an electric apparatus including the battery described above and/or the battery system described above, which can at least reduce high-voltage risks posed by the battery to the outside and enhance the safety of the battery.

In some embodiments, the electric apparatus further includes: a vehicle controller, where the first switch member and the second switch member are connected to the vehicle controller, the first switch member obtains a second control signal from the vehicle controller and controls, based on the second control signal, the connection and disconnection of a power supply path of the first power supply bus to the first connecting member; and the second switch member obtains a third control signal from the vehicle controller and controls, based on the third control signal, the connection and disconnection of the power supply path of the second power supply bus to the second connecting member. The switch members are electrically connected to the vehicle controller, enabling the vehicle controller to control, based on the conditions of the vehicle, the switch members to operate, improving automated monitoring of the electric apparatus and automated control of the switch members and the like, thereby improving control accuracy and real-time performance, and enhancing the safety of the battery.

### BRIEF DESCRIPTION OF DRAWINGS

By reading the detailed description of the preferred embodiments below, various other advantages and benefits will become apparent to those skilled in the art. The drawings are provided only for the purpose of illustrating the preferred embodiments and are not considered to limit this application. Moreover, throughout the drawings, identical components are denoted by identical reference signs. In the drawings:
FIG. 1 is a schematic structural diagram of a vehicle according to one or more embodiments;
FIG. 2 is a schematic structural exploded view of a battery according to one or more embodiments;
FIG. 3 is a second schematic structural diagram of a battery according to one or more embodiments;
FIG. 4 is a third schematic structural diagram of a battery according to one or more embodiments;
FIG. 5 is a fourth schematic structural diagram of a battery according to one or more embodiments;
FIG. 6 is a schematic structural diagram of a wall portion of a battery according to one or more embodiments;
FIG. 7 is a schematic front view of the wall portion shown in FIG. 6;
FIG. 8 is a schematic bottom view of the wall portion shown in FIG. 6;
FIG. 9 is a fifth schematic structural diagram of a battery according to one or more embodiments; and
FIG. 10 is a schematic structural diagram of a battery system according to one or more embodiments.

Reference signs in specific embodiments are as follows:
vehicle 1000a, battery 100a, controller 200a, motor 300a, battery module 20, first housing 21, first switch member 22, first power supply bus 201, first wall portion 211, first connecting member 210, connection socket 23, panel 211a, side plate 211b, bottom plate 211d, top cover 211c, high-voltage positive bus A1, high-voltage positive output port B1, battery management unit 24, high-voltage negative bus A2, high-voltage negative output port B2, low-voltage input port C1, low-voltage output port C2, heating input port D1, heating output port D2, second housing 111, second switch member 112, second power supply bus 221, second connecting member 220, and second wall portion 231.

### DESCRIPTION OF EMBODIMENTS

The embodiments of the technical solutions of this application will be described in detail below with reference to the accompanying drawings. The following embodiments are only used to more clearly illustrate the technical solutions of this application and are therefore provided as examples, not to limit the scope of protection of this application.

Unless otherwise defined, all technical and scientific terms used herein have the same meaning as commonly understood by those skilled in the technical field of this application; the terms used herein are for the purpose of describing specific embodiments only and are not intended to limit this application; and the terms "include", "comprise", and any variations thereof in the description, claims, and the above description of the drawings of this application are intended to cover non-exclusive inclusion.

Reference to "embodiment" herein means that a particular feature, structure, or characteristic described in connection with the embodiment may be included in at least one embodiment of this application. The appearance of this phrase in various places in the specification does not necessarily refer to the same embodiment, nor is it a separate or alternative embodiment mutually exclusive with other embodiments. Those skilled in the art explicitly and implicitly understand that the embodiments described herein may be combined with other embodiments.

In the description of the embodiments of this application, the term "multiple" refers to two or more (including two), similarly, "multiple groups" refers to two or more groups (including two groups), and "multiple pieces" refers to two or more pieces (including two pieces).

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientations or positional relationships shown in the drawings, and are only for the convenience of describing the embodiments of this application and simplifying the description, rather than indicating or implying that the referred apparatus or element must have a specific orientation, be constructed and operated in a specific orientation, and thus cannot be construed as limiting the embodiments of this application.

In the description of the embodiments of this application, the term "and/or" is merely an association describing associated objects, indicating that three relationships may exist, for example, A and/or B may indicate the following three cases: only A is present, A and B are both present, and only B is present. Additionally, the character "/" herein generally indicates an "or" relationship between the contextually associated objects.

In the description of the embodiments of this application, unless otherwise expressly specified and limited, the technical terms "mounting", "connection", "join", "fastening", and the like should be understood in a broad sense, for example, they may refer to a fixed connection, a detachable connection, or an integral connection; they may refer to a mechanical connection or an electrical connection; they may refer to a direct connection, an indirect connection through an intermediate medium, an internal communication between two elements, or interaction between two elements. Those skilled in the art can understand the specific meanings of the above terms in the embodiments of this application based on specific circumstances.

With the development of battery technology, batteries are applied in an increasing number of fields and are gradually replacing traditional fossil energy sources in the fields such as automotive power. A battery can store chemical energy and controllably convert the chemical energy into electrical energy. In rechargeable batteries, after discharge, the active material can be reactivated through charging for continued use.

Since the voltage of battery systems, which are key components of electric apparatuses such as electric vehicles, ranges from tens of volts to hundreds of volts, there are high-voltage safety risks during use, maintenance, or production processes. In related technologies, a fuse is added inside a battery box to reduce high-voltage safety risks, but this method only provides fuse protection in cases of external short circuits or electric shocks, and the battery still poses persistent high-voltage safety risks to the outside.

Based on the above considerations, this application provides a battery, a battery system, and an electric apparatus. The battery includes a battery module connected to a power supply bus; a housing, where the battery module is disposed within the housing, the housing is provided with a connector configured to be connected to a load, and an output terminal of the power supply bus is connected to the connector; and a switch member, disposed at the output terminal and configured to control connection and disconnection of a power supply path of the power supply bus to the connector. In this way, the switch member can control the connection and disconnection of the electrical path between the power supply bus of the battery module and the load, thereby allowing the battery module to be electrically disconnected from the load through the switch member, enabling connection and disconnection of the electrical path between the battery module and the load, reducing high-voltage risks posed by the battery to the outside, and enhancing the safety of the battery.

Furthermore, an internal electrical path of the battery module also forms an electrical circuit through the power supply bus and the load, so when the connection and disconnection of the electrical path between the battery module and the load is enabled, connection and disconnection of the internal electrical path of the battery module can also be synchronously enabled, further enhancing the safety of the battery.

Furthermore, the switch member of this application is disposed at the output terminal of the power supply bus, and there is no need to modify the structure of the existing internal components such as the battery module of the battery and connection structures between the components, resulting in a simple process and low cost.

The battery, battery system, and electric apparatus disclosed in the embodiments of this application can be used in electric apparatuses that use a battery as a power source or in various energy storage systems that use a battery as an energy storage element. The electric apparatus may include, but is not limited to, mobile phones, tablets, laptops, electric toys, electric tools, electric bicycles, electric vehicles, ships, and spacecraft. Electric toys may include fixed or mobile electric toys, such as game consoles, electric car toys, electric ship toys, electric airplane toys, and the like, while the spacecraft may include airplanes, rockets, space shuttles, spaceships, and the like.

For convenience of explanation, an electric apparatus of one embodiment of this application being a vehicle 1000a is used an example for description in the following embodiments.

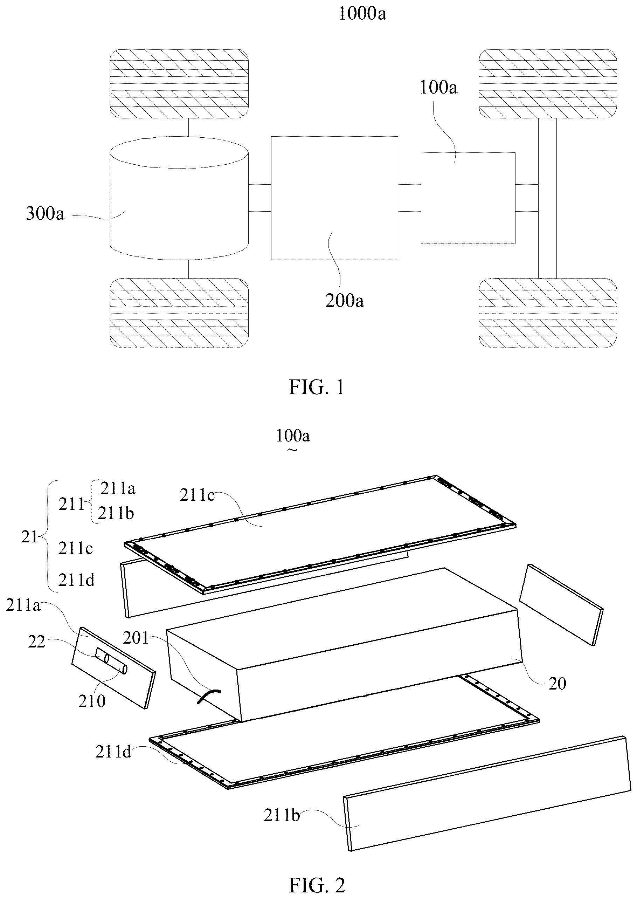

Referring to FIG. 1, the vehicle 1000a may be a fuel vehicle, a gas vehicle, or a new energy vehicle, where the new energy vehicle may be a battery electric vehicle, a hybrid electric vehicle, or a range-extended vehicle. A battery 100a is disposed inside the vehicle 1000a, and the battery 100a may be disposed at the bottom, front, or rear of the vehicle 1000a. The battery 100a may be configured to supply power to the vehicle 1000a, for example, the battery 100a may serve as an operational power source for the vehicle 1000a. The vehicle 1000a may further include a controller 200a and a motor 300a, where the controller 200a is configured to control the battery 100a to supply power to the motor 300a, for example, for the operational power requirements during starting, navigation, and driving of the vehicle 1000a.

In some embodiments of this application, the battery 100a may not only serve as an operational power source for the vehicle 1000a but also as a driving power source for the vehicle 1000a, replacing or partially replacing fuel or natural gas to provide driving power for the vehicle 1000a.

In some embodiments, the battery 100a may be an energy storage apparatus. The energy storage apparatus includes energy storage containers, energy storage cabinets, and the like.

The battery 100a mentioned in these embodiments of this application refers to a single physical module including one or more battery cells to provide higher voltage and capacity.

In the embodiments of this application, the battery may be a secondary battery, where a secondary battery refers to a battery that can be reused by reactivating an active material through charging after discharge. The battery may alternatively be a primary battery.

The battery includes, but is not limited to, lithium-ion batteries, sodium-ion batteries, sodium-lithium-ion batteries, lithium metal batteries, sodium metal batteries, lithium-sulfur batteries, magnesium-ion batteries, nickel-hydrogen batteries, nickel-cadmium batteries, lead-acid batteries, and the like.

In some embodiments, referring to FIG. 2, the battery 100a may be a battery pack, where the battery pack includes: a battery module 20, a first housing 21, and a first switch member 22, where the battery module 20 is connected to a first power supply bus 201, the battery module 20 is disposed within the first housing 21, the first housing 21 is provided with a first wall portion 211, the first wall portion 211 is provided with a first connecting member 210 configured to be connected to a load, and an output terminal of the first power supply bus 201 is connected to the first connecting member 210. The first switch member 22 is disposed at an output terminal of the first power supply bus 201 and configured to control connection and disconnection of the electrical path between the first power supply bus 201 and the first connecting member 210.

The battery 100a may include one or multiple battery modules 20, where the battery module 20 may include one or multiple battery cells. After the multiple battery modules 20 are electrically connected, the first power supply bus 201 serves as a total voltage bus of the battery 100a, to be specific, a voltage bus is electrically connected to a load. The first power supply bus 201 may include a positive power supply bus and a negative power supply bus, and a positive port connected to the positive power supply bus and a negative port connected to the negative power supply bus may be provided on the wall portion 211. The positive power supply bus is electrically connected to the load through the positive port, and the negative power supply bus is electrically connected to the load through the negative port, to form an electrical circuit between the battery module 20 and the load.

The connection between the battery module 20 and the first power supply bus 201 refers to not only a mechanical connection therebetween for enhancing the stability therebetween but also an electrical connection therebetween for enabling electrical transmission. The connection between the output terminal of the first power supply bus 201 and the first connecting member 210 includes both a mechanical connection and an electrical connection therebetween. The provision of the first switch member 22 at the output terminal of the first power supply bus 201 means that the first switch member 22 is connected to an end portion of the output terminal of the first power supply bus 201 or connected in series with the output terminal at a position close to the end portion.

The output terminal of the first power supply bus 201 refers to an end of the first power supply bus 201 connected to the load, for supplying power to the load; and an input end of the first power supply bus 201 is electrically connected to the battery module 20, for obtaining electrical energy from the battery module 20.

In some embodiments, when there are multiple battery cells, the multiple battery cells are arranged and fixed to form a battery module, and the battery module and an auxiliary structural component constitute the battery module 20, where the auxiliary structural component serves to collect current, collect data, and fix and protect the battery cells.

In the battery module 20, there may be multiple battery cells, and the multiple battery cells may be connected in series, parallel, or series-parallel, where being connected in series-parallel refers to both a series connection and a parallel connection of the multiple battery cells. The multiple battery cells may be directly connected in series, parallel, or series-parallel to form the battery module 20, and multiple battery modules 20 may then be connected in series, parallel, or series-parallel to form an entirety which is accommodated within the first housing 21. The battery 100a may further include another structure, for example, the battery 100a may further include a busbar component for achieving electrical connection between the multiple battery cells.

The first housing 21 is configured to provide an accommodation space for the battery module 20. The first housing 21 may be implemented in the form of a box or the like.

In some embodiments, the first housing 21 may serve as a portion of a chassis structure of the vehicle 1000a. For example, a portion of the first housing 21 may form at least a portion of the floor of the vehicle 1000a, or a portion of the first housing 21 may form at least a portion of crossbeams and longitudinal beams of the vehicle 1000a.

The first switch member 22 refers to an element or component capable of enabling connection and disconnection of an electrical path, and by controlling the on and off of the first switch member 22, the connection and disconnection of the electrical path between the first power supply bus 201 and the load can be enabled.

In these embodiments, a first connecting member 210 connected to a load is disposed on the first housing 21 of the battery, so that the first connecting member 210 enables electrical transmission between the battery module 20 within the first housing 21 of the battery 100a and the load; a first switch member 22 is disposed at the output terminal of the first power supply bus 201 of the battery module 20; and the first switch member 22 controls the connection and disconnection of the electrical path between the first power supply bus 201 and the first connecting member 210. Since the first power supply bus 201 is connected to the load through the first connecting member 210, the first switch member 22 can control the connection and disconnection of the electrical path between the first power supply bus 201 of the battery module 20 and the load, thereby allowing the battery module 20 to be electrically disconnected from the load through the first switch member 22, enabling the connection and disconnection of the electrical path between the battery module 20 and the load, at least reducing high-voltage risks posed by the battery 100a to the outside, and enhancing the safety of the battery 100a.

Furthermore, an internal electrical path of the battery module 20 also forms an electrical circuit through the first power supply bus 201 and the load, so when the connection and disconnection of the electrical path between the battery module 20 and the load is enabled, connection and disconnection of the internal electrical path of the battery module 20 can also be synchronously enabled, further enhancing the safety of the battery 100a.

Furthermore, the first switch member 22 is disposed at the output terminal of the first power supply bus 201, and there is no need to modify the structure of the existing internal components such as the battery module 20 of the battery 100a and connection structures between the components, resulting in a simple process and low cost.

In some embodiments, a wall portion 211 of the first housing 21 is provided with a first through hole, the first connecting member 210 is mounted on a side of the first wall portion 211 facing away from the battery module 20, and a portion of the first switch member 22 is disposed within the first through hole and connected to the first connecting member 210.

Mounting the first connecting member 210 on the side of the first wall portion 211 facing away from the battery module 20, that is, an outer side of the first housing 21, can reduce interference of the first connecting member 210 to the battery module 20; and using the first through hole in the first wall portion 211 to route the connection terminal of the first switch member 22 can simplify the structure and process.

In some embodiments, the first wall portion 211 of the first housing 21 is provided with a first through hole, the first connecting member 210 is mounted on a side of the first wall portion 211 facing away from the battery module 20, and a portion of the output terminal of the first power supply bus 201 is disposed within the first through hole and connected to the first connecting member 210.

Mounting the first connecting member 210 on the side of the first wall portion 211 facing away from the battery module 20, that is, the outer side of the first housing 21, can reduce interference of the first connecting member 210 to the battery module 20; and using the first through hole in the first wall portion 211 to route the first power supply bus 201 can enhance the routing stability of the first power supply bus 201 and simplify the structure and process.

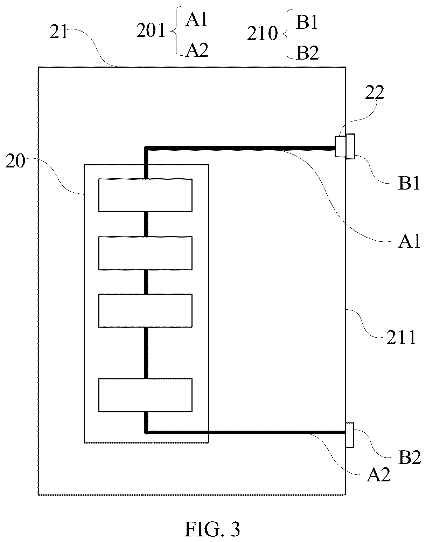

In some embodiments, as shown in FIG. 3, the first switch member 22 is disposed on a side of the first wall portion 211 of the first housing 21 close to the battery module 20, a portion of the first switch member 22 is disposed within the first through hole, and the first switch member 22 is connected to the output terminal of the first power supply bus 201 and the first connecting member 210, respectively. Specifically, one connection terminal of the first switch member 22 is connected to the output terminal of the first power supply bus 201, and another connection terminal of the first switch member 22 is connected to the first connecting member 210.

Disposing the first switch member 22 on the side of the first wall portion 211 of the first housing 21 close to the battery module 20, that is, an inner side of the first housing 21, allows the first housing 21 to protect the first switch member 22 and reduce erroneous operations to the first switch member 22; and a connection terminal of the first switch member 22 extends through the first through hole to the outer side of the first housing 21 so as to be connected to the first connecting member 210, such that the first switch member 22 is disposed between the output terminal of the first power supply bus 201 and the first connecting member 210, thereby enabling the first switch member 22 to control the connection and disconnection of the electrical path between the first power supply bus 201 and the first connecting member 210.

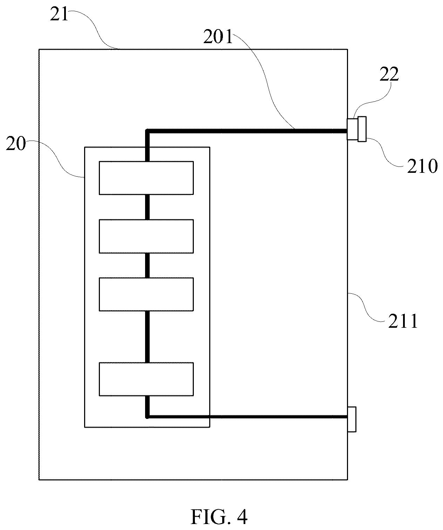

In some embodiments, as shown in FIG. 4, the first switch member 22 is disposed on a side of the first wall portion 211 facing away from the battery module 20, a portion of the first switch member 22 is disposed within the first through hole, and the first switch member 22 is connected to the output terminal of the first power supply bus 201 and the first connecting member 210, respectively. Specifically, one connection terminal of the first switch member 22 is connected to the output terminal of the first power supply bus 201, and another connection terminal of the first switch member 22 is connected to the connecting member.

Disposing the first switch member 22 on the side of the first wall portion 211 of the first housing 21 facing away from the battery module 20, that is, the outer side of the first housing 21, can enhance the convenience of operating the first switch member 22, and there is no need to operate the first housing 21 or its internal components when the first switch member 22 needs to be operated; and a connection terminal of the first switch member 22 extends through the first through hole to the outer side of the first housing 21 so as to be connected to the first connecting member 210, such that the first switch member 22 is disposed between the output terminal of the first power supply bus 201 and the first connecting member 210, thereby enabling the first switch member 22 to control the connection and disconnection of the electrical path between the first power supply bus 201 and the first connecting member 210.

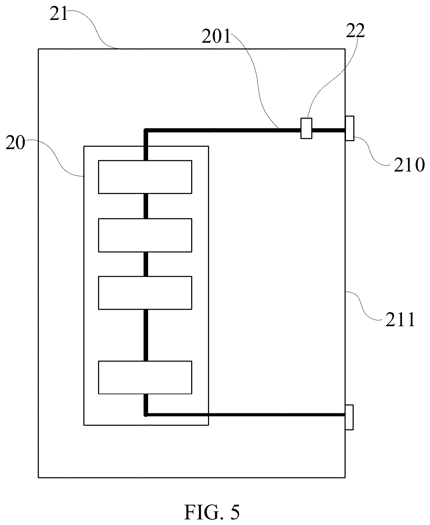

In some embodiments, as shown in FIG. 5, the first switch member 22 is disposed on the side of the first wall portion 211 close to the battery module 20, the first switch member 22 is connected in series with the output terminal of the first power supply bus 201, and a portion of the output terminal of the first power supply bus 201 is disposed within the first through hole and connected to the first connecting member 210.

Specifically, the first switch member 22 being connected in series with the output terminal of the first power supply bus 201 means that the first switch member 22 is connected in series with the first power supply bus 201 and disposed near the output terminal; and the output terminal of the first power supply bus 201 extends through the first through hole in the first wall portion 211 to the outer side of the first housing 21 so as to be connected to the first connecting member 210.

Disposing the first switch member 22 on the side of the first wall portion 211 of the first housing 21 close to the battery module 20, that is, the inner side of the first housing 21, allows the first housing 21 to protect the first switch member 22 and reduce erroneous operations to the first switch member 22; and the first switch member 22 is connected in series with the output terminal of the first power supply bus 201 and connected to the first connecting member 210 through the output terminal of the first power supply bus 201, enabling the first switch member 22 to control the connection and disconnection of the electrical path between the first power supply bus 201 and the first connecting member 210.

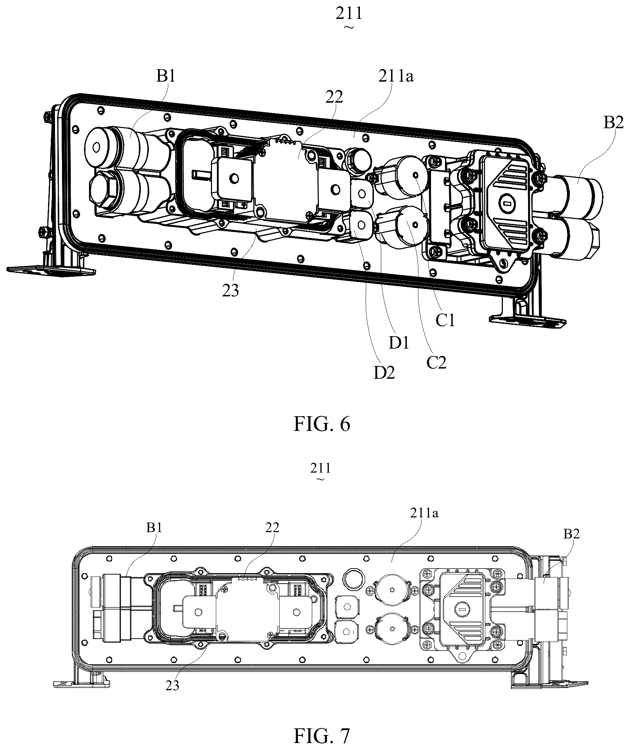

In some embodiments, as shown in FIG. 6 to FIG. 8, the battery 100a further includes a connection socket 23 mounted at the through hole, where the first switch member 22 is plugged into the connection socket 23.

Specifically, mounting the connection socket 23 at the first through hole means that the connection socket 23 is connected to the first wall portion 211 and covers the first through hole to facilitate the installation of the first switch member 22.

The connection socket 23 may be mounted at an inner end face of the first through hole, so as to be disposed inside the housing 21, or the connection socket 23 is mounted at an outer end face of the first through hole, so as to be disposed outside the first housing 21, or a portion of the connection socket 23 is disposed within the first through hole, and the like. This is not specifically limited.

Using the connection socket 23 to connect the first switch member 22 to the first wall portion 211 can enhance the convenience of mounting and dismounting the first switch member 22.

In some embodiments, the first connecting member 210 is fixed to the connection socket 23, which can enhance the convenience of mounting and dismounting the first connecting member 210.

In some embodiments, an extension direction of the first connecting member 210 is perpendicular to an axial direction of the first through hole.

The axial direction of the first through hole is consistent with a thickness direction of the wall portion 211, and arranging the extension direction of the first connecting member 210 perpendicular to the thickness direction of the first wall portion 211 allows the first connecting member 210 to extend along the surface of the first wall portion 211, enabling the first wall portion 211 to serve as a supporting protective surface to reduce the risk of damage to the first connecting member 210 and enabling the first connecting member 210 to share extension space with the first wall portion 211, thereby reducing the volume of the battery 100a.

In some embodiments, the first wall portion 211 includes a panel 211a, and the first connecting member 210 is disposed on the panel 211a.

Specifically, the first wall portion 211 further includes a side plate 211b, and the first housing 21 further includes a bottom plate 211d and a top cover 211c, where the panel 211a is an end plate of the first housing 21. The panel 211a, as a portion of the first housing 21, together with the side plate 211b, top cover 211c, and bottom plate 211d of the first housing 21, defines an accommodation space for accommodating the battery module 20 and the like.

Disposing the first connecting member 210 on the panel 211a of the first housing 21 facilitates the connection between the first power supply bus 201 of the battery module 20 and the first connecting member 210, can shorten the electrical path therebetween, and facilitates the connection of the first connecting member 210 and the load, reducing interference to the first connecting member 210.

In some embodiments, the battery 100a further includes: a panel 211a disposed on a side of the first wall portion 211 facing away from the battery module 20, where the first connecting member 210 is disposed on the panel 211a. In these embodiments, disposing the first connecting member 210 on the panel 211a independent of the first housing 21 can enhance the overall reliability of the first housing 21, and connecting the first connecting member 210 to the first housing 21 through the panel 211a allows for maintenance of the first connecting member 210 without disassembling the first housing 21, thereby enhancing the convenience of maintaining the first connecting member 210.

In some embodiments, the first power supply bus 201 includes a high-voltage bus, and the first connecting member 210 includes a high-voltage connector.

A high-voltage connector connected to a load is disposed on the first housing 21, the first switch member 22 is disposed at an output terminal of the high-voltage bus, and an electrical path between the high-voltage bus and the high-voltage connector is controlled through the first switch member 22, reducing high-voltage safety risks posed by the battery 100a to the outside.

In some embodiments, as shown in FIG. 3 and FIG. 6 to FIG. 8, the high-voltage bus includes a high-voltage positive bus A1, and the high-voltage connector includes a high-voltage positive output port B1, where the high-voltage positive bus A1 is electrically connected to the load through the high-voltage positive output port B1.

The first switch member 22 is disposed at an output terminal of the high-voltage positive bus A1 and an electrical path between the high-voltage positive bus A1 and the high-voltage positive output port B1 is controlled through the first switch member 22, reducing high-voltage safety risks posed by the battery 100a to the outside. In addition, the electrical path to the load is disconnected from the output terminal of the high-voltage positive bus A1 of the battery 100a, that is, a total high-voltage positive output terminal of the battery 100a, improving the real-time performance of power disconnection control, thereby further enhancing the safety of the battery 100a.

In some embodiments, the first switch member 22 includes a relay.

A relay (an electric control device) is an electric appliance that causes a predetermined step change of a controlled variable in an electrical output circuit when a change in an input variable meets specified requirements. It has an interactive relationship between a control system (also known as an input circuit) and a controlled system (also known as an output circuit). It is essentially an "automatic switch" that uses a small current to control the operation of a large current, and therefore plays roles such as automatic regulation, safety protection, and circuit switching in circuits.

A relay is used to implement the function of the first switch member 22. Since the relay has the advantages such as high sensitivity, low control power, good electromagnetic compatibility, long lifespan, and high reliability, the safety of the battery 100a can be further enhanced.

In some embodiments, the first switch member 22 includes a manual maintenance switch with an internal relay.

The manual maintenance switch may be configured to prevent short circuits during maintenance of high-voltage circuit systems and can provide safety and reliable guarantee for the maintenance of a power system of the vehicle 1000a, not only serving as a maintenance protection switch but also providing short-circuit protection.

A manual maintenance switch with an internal relay is used to implement the function of the first switch member 22. Since the manual maintenance switch has the advantages such as sufficient system response time, highly reliable redundant design, and good heat dissipation design, the reliability of the first switch member 22 can be enhanced, thereby further enhancing the safety of the battery 100a. Additionally, with the advantages such as flexible installation, the manual maintenance switch can reduce the complexity of the installation process of the battery 100a and improve the flexibility of the installation process.

The manual maintenance switch with an internal relay is used to implement the function of the first switch member 22, which not only can replace a manual maintenance switch on a traditional battery pack for disconnecting an electrical path between positive and negative electrodes of a battery cell, but also can enable an electrical circuit between the battery 100a and a load, thereby at least improving high-voltage risks to the outside.

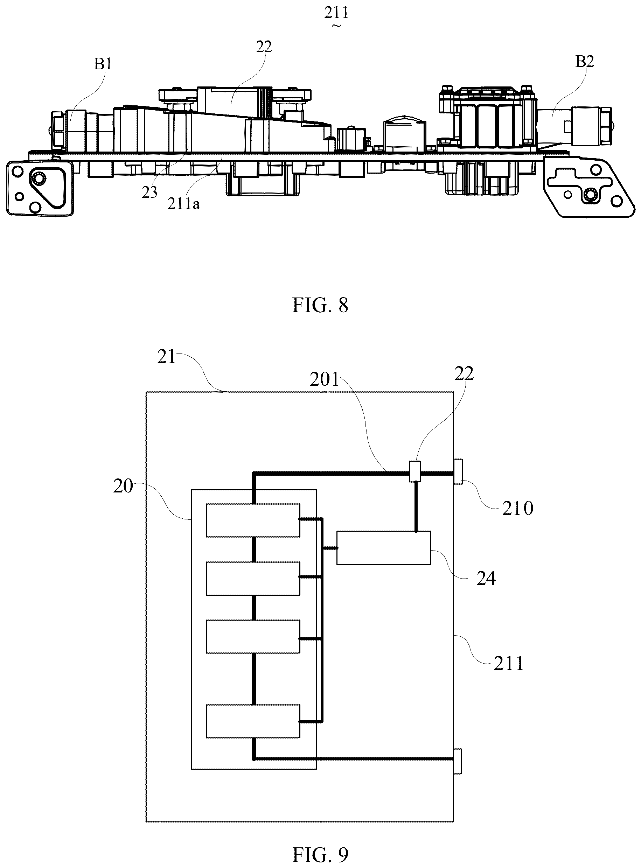

In some embodiments, as shown in FIG. 9, the battery 100a further includes a battery management unit 24 connected to the first switch member 22, where the first switch member 22 obtains a first control signal from the battery management unit 24 and controls, based on the first control signal, the connection and disconnection of the electrical path between the first power supply bus 201 and the first connecting member 210.

The battery management unit 24 monitors and manages the battery module 20, specifically by collecting and calculating parameters such as voltage, current, temperature, and SOC, to control charging and discharging processes of current of the battery module 20, thereby protecting the battery module 20 and improve the overall performance of the battery.

A control terminal of the first switch member 22 is electrically connected to the battery management unit 24, enabling the battery management unit 24 to control, based on the parameters of the battery module 20 or the like, the first switch member 22 to operate, improving automated monitoring of the battery module 20 and the like and automated control of the first switch member 22 and the like, thereby improving control accuracy and real-time performance, and enhancing the safety of the battery 100a.

Furthermore, after the vehicle 1000a is powered off, when the battery management unit 24 is powered off, the first switch member 22 loses power, so that the first switch member 22 automatically disconnects the electrical path between the battery module 20 and the load.

The battery management unit 24 is disposed within the first housing 21, so as to be protected by the first housing 21.

In some embodiments, referring to FIG. 3 and FIG. 6 to FIG. 8, the battery 100a includes: a battery module 20, a first housing 21, and a first switch member 22, where the battery module 20 is connected to a first power supply bus 201, the battery module 20 is disposed within the first housing 21, the first housing 21 is provided with a first wall portion 211, and the first wall portion 211 is provided with a first connecting member 210 configured to be connected to a load. The first wall portion 211 of the first housing 21 is provided with a first through hole. The first switch member 22 is disposed on a side of the first wall portion 211 of the first housing 21 close to the battery module 20, a portion of the first switch member 22 is disposed within the first through hole, and the first switch member 22 is connected to an output terminal of the first power supply bus 201 and the first connecting member 210, respectively. Specifically, one connection terminal of the first switch member 22 is connected to the output terminal of the first power supply bus 201, and another connection terminal of the first switch member 22 is connected to the first connecting member 210. This configuration is intended to control connection and disconnection of an electrical path between the first power supply bus 201 and the first connecting member 210.

In these embodiments, the first connecting member 210 connected to the load is disposed on the first housing 21 of the battery, so that the first connecting member 210 enables electrical transmission between the battery module 20 within the first housing 21 of the battery 100a and the load; and the first switch member 22 is disposed between the output terminal of the first power supply bus 201 of the battery module 20 and the first connecting member 210, and the first switch member 22 controls the connection and disconnection of the electrical path between the first power supply bus 201 and the first connecting member 210. Since the first power supply bus 201 is connected to the load through the first connecting member 210, the first switch member 22 can control the connection and disconnection of the electrical path between the first power supply bus 201 of the battery module 20 and the load, thereby allowing the battery module 20 to be electrically disconnected from the load through the first switch member 22, enabling the connection and disconnection of the electrical path between the battery module 20 and the load, at least reducing high-voltage risks posed by the battery 100a to the outside, and enhancing the safety of the battery 100a. Furthermore, an internal electrical path of the battery module 20 also forms an electrical circuit through the first power supply bus 201 and the load, so when the connection and disconnection of the electrical path between the battery module 20 and the load is enabled, connection and disconnection of the internal electrical path of the battery module 20 can also be synchronously enabled, further enhancing the safety of the battery 100a. Moreover, the first switch member 22 is disposed at the output terminal of the first power supply bus 201, and there is no need to modify the structure of the existing internal components such as the battery module 20 of the battery 100a and connection structures between the components, resulting in a simple process and low cost.

Furthermore, disposing the first switch member 22 on a side of the first wall portion 211 of the first housing 21 close to the battery module 20, that is, an inner side of the first housing 21, allows the first housing 21 to protect the first switch member 22 and reduce erroneous operations to the first switch member 22.

The wall portion 211 is a panel 211a of the first housing 21. Disposing the first connecting member 210 on the panel 211a of the first housing 21 facilitates the connection between the first power supply bus 201 of the battery module 20 and the first connecting member 210, can shorten the electrical path therebetween, and facilitates the connection of the first connecting member 210 and the load, reducing interference to the first connecting member 210.

In other embodiments, the first connecting member 210 may alternatively be disposed on another portion of the first housing 21.

Furthermore, the battery 100a further includes a connection socket 23 mounted at the first through hole, where the first switch member 22 is plugged into the connection socket 23. The connection socket 23 is mounted at an outer end face of the first through hole, so as to be disposed outside the first housing 21. Using the connection socket 23 to connect the first switch member 22 to the wall portion 211 can enhance the convenience of mounting and dismounting the first switch member 22.

Furthermore, the first connecting member 210 is fixed to the connection socket 23, which can enhance the convenience of mounting and dismounting the first connecting member 210.

The first connecting member 210 may be integrally formed with the connection socket 23 to improve stability therebetween, reducing installation structures between the first connecting member 210 and the panel 211a, and enhancing the parameters such as the strength of the panel 211a, so that the first connecting member 210 and the first switch member 22 can be connected by just mounting the first switch member 22 on the connection socket 23.

In other embodiments, the first switch member may alternatively be directly fixed to the first housing.

In some embodiments, an extension direction of the first connecting member 210 is perpendicular to an axial direction of the first through hole.

The extension direction of the first connecting member 210 refers to an arrangement direction of one end of the first connecting member 210 connected to the first switch member 22 and another end of the first connecting member 210 connected to the load. The axial direction of the first through hole is consistent with a thickness direction of the first wall portion 211. Arranging the extension direction of the first connecting member 210 perpendicular to the thickness direction of the first wall portion 211 allows the first connecting member 210 to extend along the surface of the wall portion 211, enabling the wall portion 211 to serve as a supporting protective surface to reduce the risk of damage to the first connecting member 210 and enabling the first connecting member 210 to share extension space with the wall portion 211, thereby reducing the volume of the battery 100a.

In other embodiments, the first connecting member may extend along the axial direction of the first through hole and be supported by a support member, to shorten the electrical path between the first switch member or the first power supply bus and the first connecting member. Alternatively, the extension direction of the connecting member may be arranged at another angle relative to the first wall portion.

In other embodiments, the first connecting member may be disposed on the inner side, extending out of the housing through the first through hole, so as to be connected to the load.

Furthermore, in some embodiments, the first power supply bus 201 includes a high-voltage positive bus A1 and a high-voltage negative bus A2, and the first connecting member 210 includes a high-voltage positive output port B1 and a high-voltage negative output port B2, where the high-voltage positive bus A1 is electrically connected to the load through the high-voltage positive output port B1, and the high-voltage negative bus A2 is electrically connected to the load through the high-voltage negative output port B2. The first switch member 22 is disposed at an output terminal of the high-voltage positive bus A1 and an electrical path between the high-voltage positive bus A1 and the high-voltage positive output port B1 is controlled through the first switch member 22, reducing high-voltage safety risks posed by the battery 100a to the outside.

In other embodiments, the first switch member may be disposed at the output terminal of the high-voltage negative bus; or switch members may be disposed at both the output terminal of the high-voltage positive bus and the output terminal of the high-voltage negative bus to achieve a redundant design, further enhancing the safety.

In these embodiments, a relay is used to implement the function of the first switch member 22. Since the relay has the advantages such as high sensitivity, low control power, good electromagnetic compatibility, long lifespan, and high reliability, the safety of the battery 100a can be further enhanced.

In other embodiments, other switches may be used instead of a relay.

Furthermore, in these embodiments, a manual maintenance switch with an internal relay is used to implement the function of the first switch member 22, which not only can replace the manual maintenance switch on a traditional battery pack for disconnecting an electrical path between positive and negative electrodes of a battery cell, but also can enable an electrical circuit between the battery 100a and the load, thereby at least improving high-voltage risks to the outside.

In other embodiments, a relay box or the like may alternatively be used to implement the function of the relay.

Furthermore, the panel 211a is further provided with a low-voltage input port C1, a low-voltage output port C2, a heating input port D1, and a heating output port D2, where these ports are respectively connected to the battery module 20 or other components within the box 21 to achieve corresponding functions. To enhance the safety, these ports may alternatively be correspondingly provided with the first switch member described above.

In other embodiments, the first housing may further adopt other structures, such as a top cover and a bottom cover engaged with each other from top to bottom, or a top plate and a bottom cover with an opening, or a bottom plate and a top cover with an opening, and the like.

After the vehicle is powered off, when the battery 100a is not operating, a total positive high voltage and a total negative high voltage are outputted outward, which may pose high-voltage electric shock risks. In this application, an external connector is disposed for the battery 100a, that is, a manual maintenance switch is disposed on the panel 211a of the first connecting member, where the manual maintenance switch is designed with an internal relay which can be turned on or off, one side of the relay is connected to a total positive terminal inside the battery 100a and the high-voltage positive bus A1, and the other side of the relay is connected to a total negative output terminal of the battery 100a, that is, the high-voltage positive output port B1. Thus, after the vehicle is powered off, the relay is turned off due to disconnection of a low voltage, making the total positive output terminal of the battery 100a be automatically and completely disconnected from the outside, thereby achieving complete isolation of the battery 100a from the outside at the output terminal, and providing safer protection.

Moreover, the manual maintenance switch is designed on the panel 211a of the battery 100a, and there is no need to modify the internal structure of the battery 100a. The manual maintenance switch can play the role of a manual maintenance switch and can also actively turn off the relay after the vehicle is powered off at a low voltage, disconnecting an electrical path between the internal high voltage of the manual maintenance switch and the external connector, thereby achieving safer anti-electric shock protection.

Furthermore, the panel 211a may alternatively be provided with another high-voltage positive output port B1 and another high-voltage negative output port B2 as a redundant design to further enhance the safety.

Furthermore, the panel 211a may alternatively be provided with a bracket, and the panel 211a is connected to a bottom plate and a side plate through the bracket.

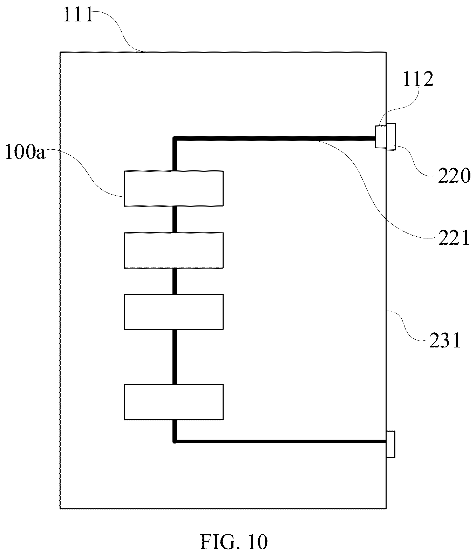

In some embodiments, as shown in FIG. 10, the battery system includes: a battery 100a, a second housing 111, and a second switch member 112, where the battery 100a is connected to a second power supply bus 221, the battery 100a is disposed within the second housing 111, the second housing 111 is provided with a second wall portion 231, the second wall portion 231 is provided with a second connecting member 220 configured to be connected to a load, and an output terminal of the second power supply bus 221 is connected to the second connecting member 220. The second switch member 112 is disposed at the output terminal of the second power supply bus 221 and configured to control connection and disconnection of an electrical path between the second power supply bus 221 and the second connecting member 220.

The battery 100a in these embodiments is the battery 100a described in the above embodiments or may be the battery module 20 and other components other than the second housing 111 of the battery 100a described in the above embodiments.

The battery system in these embodiments may include one or multiple batteries 100a. After the multiple batteries 100a are electrically connected, the second power supply bus 221 serves as a total voltage bus of the battery system, to be specific, the voltage bus is electrically connected to a load. The second power supply bus 221 may include a positive power supply bus and a negative power supply bus, and a positive port connected to the positive power supply bus and a negative port connected to the negative power supply bus may be provided on the wall portion 211 of the second housing 111. The positive power supply bus is electrically connected to the load through the positive port, and the negative power supply bus is electrically connected to the load through the negative port, to form an electrical circuit between the battery 100a and the load.

The output terminal of the second power supply bus 221 refers to an end of the second power supply bus 221 connected to the load, for supplying power to the load; and an input end of the second power supply bus 221 is electrically connected to the battery 100a, for obtaining electrical energy from the battery 100a.

The second housing 111 is configured to provide an accommodation space for the battery 100a. The second housing 111 may be implemented in the form of a box or the like.

In these embodiments, a second connecting member 220 connected to a load is disposed on the second housing 111 of the battery system, so that the second connecting member 220 enables electrical transmission between the battery 100a within the second housing 111 and the load; a second switch member 112 is disposed at the output terminal of the second power supply bus 221 of the battery system; and the second switch member 112 controls the connection and disconnection of the electrical path between the second power supply bus 221 and the second connecting member 220. Since the second power supply bus 221 is connected to the load through the second connecting member 220, the second switch member 220 can control the connection and disconnection of the electrical path between the second power supply bus 221 of the battery 100a and the load, thereby allowing the battery 100a to be electrically disconnected from the load through the second switch member 112, enabling connection and disconnection of the electrical path between the battery 100a and the load, at least reducing high-voltage risks posed by the battery 100a to the outside, and enhancing the safety of the battery system. Furthermore, the second switch member 112 is disposed at the output terminal of the second power supply bus 221, there is no need to modify the structure of the existing internal components of the battery system such as the battery 100a and connection structures between the components, resulting in a simple process and low cost.

Furthermore, an internal electrical path of the battery 100a also forms an electrical circuit through the second power supply bus 221 and the load, so when the connection and disconnection of the electrical path between the battery 100a and the load is enabled, connection and disconnection of the internal electrical path of the battery 100a can also be synchronously enabled, further enhancing the safety of the battery system.

In some embodiments, the second wall portion 231 of the second housing 111 is provided with a second through hole, the second connecting member 220 is mounted on a side of the second wall portion 231 of the second housing 111 facing away from the battery 100a, and a portion of the second switch member 112 is disposed within the second through hole and connected to the second connecting member 220.

Mounting the second connecting member 220 on the side of the second wall portion 231 facing away from the battery 100a, that is, an outer side of the second housing 111, can reduce interference of the second connecting member 220 to the battery module 20; and using the through hole in the second wall portion 231 of the second housing 111 to route the connection terminal of the second switch member 112 can simplify the structure and process.

In some embodiments, the second wall portion 231 of the second housing 111 is provided with a second through hole, the second connecting member 220 is mounted on a side of the second wall portion 231 facing away from the battery 100a, and a portion of the output terminal of the second power supply bus 221 is disposed within the second through hole and connected to the second connecting member 220.

Mounting the second connecting member 220 on the side of the second wall portion 231 of the second housing 111 facing away from the battery module 20, that is, the outer side of the second housing 111, can reduce interference of the second connecting member 220 to the battery module 20; and using the second through hole in the second wall portion 231 of the second housing 111 to route the second power supply bus 221 can enhance the routing stability of the second power supply bus 221 and simplify the structure and process.

In some embodiments, the second switch member is disposed on a side of the second wall portion close to the battery, a portion of the second switch member is disposed within the second through hole, and the second switch member is connected to the output terminal of the second power supply bus and the second connecting member, respectively. Disposing the second switch member on the side of the second wall portion of the second housing close to the battery, that is, an inner side of the second housing, allows the second housing to protect the second switch member and reduce erroneous operations to the second switch member; and a connection terminal of the second switch member extends through the second through hole to the outer side of the second housing so as to be connected to the second connecting member, such that the second switch member is disposed between the output terminal of the second power supply bus and the second connecting member, thereby enabling the second switch member to control the connection and disconnection of the electrical path between the second power supply bus and the second connecting member.

In some embodiments, the second switch member is disposed on a side of the second wall portion facing away from the battery module, a portion of the second switch member is disposed within the second through hole, and the second switch member is connected to the output terminal and the second connecting member, respectively. Disposing the second switch member on the side of the second wall portion of the second housing facing away from the battery, that is, the outer side of the second housing, can enhance the convenience of operating the second switch member, and there is no need to operate the second housing or its internal components when the second switch member needs to be operated; and a connection terminal of the second switch member extends through the second through hole to the outer side of the second housing so as to be connected to the second connecting member, such that the second switch member is disposed between the output terminal of the second power supply bus and the second connecting member, thereby enabling the second switch member to control the connection and disconnection of the electrical path between the second power supply bus and the second connecting member.

In some embodiments, the second switch member is disposed on a side of the second wall portion close to the battery, the second switch member is connected in series with the output terminal of the second power supply bus, and a portion of the output terminal of the second power supply bus is disposed within the second through hole and connected to the second connecting member. Disposing the second switch member on the side of the second wall portion of the second housing close to the battery, that is, the inner side of the second housing, allows the second housing to protect the second switch member and reduce erroneous operations to the second switch member; and the second switch member is connected in series with the output terminal of the second power supply bus and connected to the second connecting member through the output terminal of the second power supply bus, enabling the second switch member to control the connection and disconnection of the electrical path between the second power supply bus and the second connecting member.

The structure and principle of the second switch member may refer to those of the first switch member described above; the structure and principle of the second connecting member may refer to those of the first connecting member described above; the structure and principle of the second housing may refer to those of the first housing described above; the structure and principle of the second power supply bus may refer to those of the first power supply bus described above; and other structures of the battery system of this application may refer to those of the battery described above. The battery system and the battery differ in that the first housing of the battery is provided with the battery module inside, while the second housing of the battery system is provided with the battery inside, and the battery may include the first housing or may not include the first housing.

According to some embodiments of this application, as shown in FIG. 1, an electric apparatus includes the battery 100a described above. This configuration can at least reduce high-voltage risks posed by the battery to the outside and enhance the safety of the battery; and there is no need to modify the structure of the existing internal components such as the battery module of the battery and connection structures between the components, resulting in a simple process and low cost.

In some embodiments, the electric apparatus further includes: a vehicle controller, that is, a controller 200a, where the first switch member is connected to the vehicle controller, and the first switch member obtains a second control signal from the vehicle controller and controls, based on the second control signal, the connection and disconnection of a power supply path of the first power supply bus to the first connecting member.

A control terminal of the first switch member is electrically connected to the vehicle controller, enabling the vehicle controller to control, based on the conditions of the vehicle, the first switch member to operate, improving automated monitoring of the electric apparatus and automated control of the first switch member and the like, thereby improving control accuracy and real-time performance, and enhancing the safety of the battery 100a.

The panel of the battery may alternatively be provided with a port connected to the vehicle controller.

In conclusion, in the embodiments of this application, the connection and disconnection of the electrical path between the first power supply bus of the battery module and the load can be controlled through the first switch member, thereby allowing the battery module to be electrically disconnected from the load through the first switch member, enabling connection and disconnection of the electrical path between the battery module and the load, reducing high-voltage risks posed by the battery to the outside, and enhancing the safety of the battery.

Furthermore, an internal electrical path of the battery module also forms an electrical circuit through the first power supply bus and the load, so when the connection and disconnection of the electrical path between the battery module and the load is enabled, connection and disconnection of the internal electrical path of the battery module can also be synchronously enabled, further enhancing the safety of the battery.

Furthermore, the first switch member of this application is disposed at the output terminal of the first power supply bus, and there is no need to modify the structure of the existing internal components such as the battery module of the battery and connection structures between the components, resulting in a simple process and low cost.

In some embodiments, the electric apparatus includes the battery system described above. This configuration can at least reduce high-voltage risks posed by the battery to the outside and enhance the safety of the battery; and there is no need to modify the structure of the existing internal components of the battery system such as the battery and connection structures between the components, resulting in a simple process and cost. The switch member can be controlled to operate by the vehicle controller.

The second switch member is connected to the vehicle controller, obtains a third control signal from the vehicle controller, and controls, based on the third control signal, the connection and disconnection of the power supply path of the second power supply bus to the second connecting member.

A control terminal of the second switch member is electrically connected to the vehicle controller, enabling the vehicle controller to control, based on the conditions of the vehicle, the second switch member to operate, improving automated monitoring of the electric apparatus and automated control of the second switch member and the like, thereby improving control accuracy and real-time performance, and enhancing the safety of the battery system.

In the embodiments of this application, the connection and disconnection of the electrical path between the battery and the load can be enabled through the second switch member, reducing high-voltage risks posed by the battery system to the outside and enhancing the safety of the battery system. Furthermore, the second switch member of this application is disposed at the output terminal of the second power supply bus, and there is no need to modify the structure of the existing internal components of the battery system such as the battery and connection structures between the components, resulting in a simple process and low cost.

In conclusion, it should be noted that the above embodiments are only used to illustrate the technical solutions of this application and not to limit them. Although this application has been described in detail with reference to the foregoing embodiments, those skilled in the art should understand that they can still modify the technical solutions described in the foregoing embodiments or make equivalent replacements for some or all of the technical features; and these modifications or replacements do not cause the essence of the corresponding technical solutions to depart from the scope of the technical solutions of the embodiments of this application, and they should be included within the scope of the claims and description of this application. In particular, as long as there is no structural conflict, the various technical features mentioned in the embodiments can be combined in any manner. This application is not limited to the specific embodiments disclosed herein but includes all technical solutions falling within the scope of the claims.

## Claims

1. A battery, **characterized by** comprising:
a battery module connected to a first power supply bus;
a first housing, wherein the battery module is disposed within the first housing, the first housing comprises a first wall portion, the first wall portion is provided with a first connecting member configured to be connected to a load, and an output terminal of the first power supply bus is connected to the first connecting member; and
a first switch member, disposed at the output terminal of the first power supply bus and configured to control connection and disconnection of an electrical path between the first power supply bus and the first connecting member.

2. The battery according to claim 1, **characterized in that** the first wall portion is provided with a first through hole, the first connecting member is mounted on a side of the first wall portion facing away from the battery module, and a portion of the first switch member or a portion of the output terminal of the first power supply bus is disposed within the first through hole and connected to the first connecting member.

3. The battery according to claim 2, **characterized in that** the first switch member is disposed on a side of the first wall portion close to the battery module, a portion of the first switch member is disposed within the first through hole, and the first switch member is connected to the output terminal of the first power supply bus and the first connecting member, respectively.

4. The battery according to claim 2, **characterized in that** the first switch member is disposed on a side of the first wall portion facing away from the battery module, a portion of the first switch member is disposed within the first through hole, and the first switch member is connected to the output terminal of the first power supply bus and the first connecting member, respectively.

5. The battery according to claim 2, **characterized in that** the first switch member is disposed on a side of the first wall portion close to the battery module, the first switch member is connected in series with the output terminal of the first power supply bus, and a portion of the output terminal of the first power supply bus is disposed within the first through hole and connected to the first connecting member.

6. The battery according to any one of claims 2 to 5, **characterized in that** the battery further comprises:
a connection socket mounted at the first through hole, wherein the first switch member is plugged into the connection socket.

7. The battery according to claim 6, **characterized in that** the first connecting member is fixed to the connection socket.

8. The battery according to any one of claims 2 to 6, **characterized in that** an extension direction of the first connecting member is perpendicular to an axial direction of the first through hole.

9. The battery according to any one of claims 1 to 8, **characterized in that** the first wall portion comprises a panel, and the first connecting member is disposed on the panel.

10. The battery according to any one of claims 1 to 8, **characterized in that** the battery further comprises:
a panel disposed on a side of the first wall portion facing away from the battery module, wherein the first connecting member is disposed on the panel.

11. The battery according to any one of claims 1 to 10, **characterized in that** the first power supply bus comprises a high-voltage bus, and the first connecting member comprises a high-voltage connector.

12. The battery according to claim 11, **characterized in that** the high-voltage bus comprises a high-voltage positive bus, and the high-voltage connector comprises a high-voltage positive output port.

13. The battery according to any one of claims 1 to 12, **characterized in that** the first switch member comprises:
a relay.

14. The battery according to claim 13, **characterized in that** the first switch member comprises: a manual maintenance switch having the relay disposed therein.

15. The battery according to any one of claims 1 to 14, **characterized in that** the battery further comprises:
a battery management unit connected to the first switch member, wherein the first switch member obtains a first control signal from the battery management unit and controls, based on the first control signal, connection and disconnection of the electrical path between the first power supply bus and the first connecting member.

16. A battery system, **characterized by** comprising:
a battery connected to a second power supply bus;
a second housing, wherein the battery is disposed within the second housing, the second housing comprises a second wall portion, the second wall portion is provided with a second connecting member configured to be connected to a load, and an output terminal of the second power supply bus is connected to the second connecting member; and
a second switch member, disposed at the output terminal of the second power supply bus and configured to control connection and disconnection of an electrical path between the second power supply bus and the second connecting member.

17. The battery according to claim 16, **characterized in that** the second wall portion is provided with a second through hole, the second connecting member is mounted on a side of the second wall portion facing away from the battery, and a portion of the second switch member or a portion of the output terminal of the second power supply bus is disposed within the second through hole and connected to the second connecting member.

18. The battery according to claim 17, **characterized in that** the second switch member is disposed on a side of the second wall portion close to the battery, a portion of the second switch member is disposed within the second through hole, and the second switch member is connected to the output terminal of the second power supply bus and the second connecting member, respectively.

19. The battery according to claim 17, **characterized in that** the second switch member is disposed on a side of the second wall portion facing away from the battery, a portion of the second switch member is disposed within the second through hole, and the second switch member is connected to the output terminal of the second power supply bus and the second connecting member, respectively.

20. The battery according to claim 17, **characterized in that** the second switch member is disposed on a side of the second wall portion close to the battery, the second switch member is connected in series with the output terminal of the second power supply bus, and a portion of the output terminal of the second power supply bus is disposed within the second through hole and connected to the second connecting member.

21. An electric apparatus, **characterized by** comprising the battery according to any one of claims 1 to 15 and/or the battery system according to any one of claims 16 to 20.

22. The electric apparatus according to claim 21, **characterized in that** the electric apparatus further comprises:
a vehicle controller, wherein the first switch member and the second switch member are connected to the vehicle controller; the first switch member obtains a second control signal from the vehicle controller and controls, based on the second control signal, connection and disconnection of a power supply path of the first power supply bus to the first connecting member; and the second switch member obtains a third control signal from the vehicle controller and controls, based on the third control signal, connection and disconnection of a power supply path of the second power supply bus to the second connecting member.
